# EUROPÄISCHE PATENTSCHRIFT

(11) **EP 1 753 586 B1**
(45) Veröffentlichungstag und Bekanntmachung des Hinweises auf die Patenterteilung: **02.03.2011**
(21) Anmeldenummer: 05747868.7
(22) Anmeldetag: 01.06.2005
(51) Int. Cl.: B26B 19/28, H02K 33/00

(54) **ELEKTRISCHER RASIERAPPARAT MIT EINEM SCHWENKBAREN SCHERKOPF**
ELECTRIC SHAVING APPLIANCE COMPRISING A PIVOTABLE SHAVING HEAD
RASOIR ELECTRIQUE A TETE DE COUPE PIVOTANTE

(30) Priorität: 09.06.2004 DE 102004028064
(43) Veröffentlichungstag der Anmeldung: 21.02.2007
(73) Patentinhaber: Braun GmbH, 61476 Kronberg (DE)
(72) Erfinder: SCHAAF, Uwe, 64665 Alsbach-Hähnlein (DE)
(74) Vertreter: Sievers, Uwe
(86) Internationale Anmeldenummer: PCT/EP2005/005892
(87) Internationale Veröffentlichungsnummer: WO 2005/120781

(56) Entgegenhaltungen:
- WO-A-03/041918
- US-B1- 6 205 666
- PATENT ABSTRACTS OF JAPAN Bd. 2003, Nr. 12, 5. Dezember 2003 (2003-12-05) & JP 2004 016524 A (MATSUSHITA ELECTRIC WORKS LTD), 22. Januar 2004 (2004-01-22)
- PATENT ABSTRACTS OF JAPAN Bd. 2002, Nr. 10, 10. Oktober 2002 (2002-10-10) & JP 2002 177665 A (MATSUSHITA ELECTRIC WORKS LTD), 25. Juni 2002 (2002-06-25)

## Beschreibung

Die Erfindung bezieht sich auf einen elektrischen Rasierapparat mit einem schwenkbaren Scherkopf gemäß dem Oberbegriff des Anspruchs 1. Weiterhin bezieht sich die Erfindung auf einen elektrischen Antrieb für ein Schersystem eines elektrischen Rasierapparats mit einem schwenkbaren Scherkopf.

Ein elektrischer Rasierapparat mit einem schwenkbaren Scherkopf ist beispielsweise aus der DE 36 10 736 A1 bekannt. Dort ist ein Rasierapparat mit einem als Handgriff dienenden Gehäuse und einem um eine Schwenkachse relativ zum Gehäuse schwenkbaren Scherkopfsystem offenbart, das ein Obermesser und ein Untermesser aufweist. Die Schwenkachse ist so positioniert, daß bei einer Rasur die gesamte nutzbare Scherfläche an der Haut zur Anlage kommt und ein Wegkippen der Scherfläche von der Haut vermieden wird. In dem Handgriff ist ein elektrischer Motor untergebracht, der einen aus dem Handgriff herausragenden Antriebsstift in eine oszillierende Schwingungsbewegung versetzt. Der Antriebsstift greift in das Untermesser ein und überträgt seine Schwingungsbewegung auf das Untermesser.

Aus der DE-PS 1 009 968 ist ein elektrischer Rasierapparat mit einem starren Scherkopf bekannt, der von einem Schwingankermotor angetrieben wird, welcher einen Stator und einen Schwinganker aufweist. Der Stator ist im Gehäuse des Rasierapparats angeordnet. Der Schwinganker ist fest mit einem Untermesser des Scherkopfes und mit einer zugehörigen Führungsbuchse verbunden, die auf einer im Gehäuse ruhenden Achse gleitet und durch Federn in einer Mittelstellung gehalten wird. Das Untermesser wird durch den Schwingankermotor relativ zu einem ortsfesten Obermesser, das als eine gelochte Scherfolie ausgebildet ist, in Bewegung versetzt. Eine Schwenkbewegung des Scherkopfes relativ zum Gehäuse des Rasierapparats ist mit dieser Konstruktion allerdings nicht möglich.

Die DE 198 59 622 A1 offenbart einen elektrischen Rasierapparat mit einem schwenkbaren Scherkopf, in dem eine oder mehrere Schneideinheiten angeordnet sind. In den Schenkkopf ist ein rotatorisch oszillierender Motor zum Antreiben der Schneideinheiten des Scherkopfes eingebaut. Der Motor weist einen Stator mit einer Erregerwicklung und einen Rotor mit Permanentmagneten auf. Der Rotor führt im Betrieb Rotationsschwingungen aus, die eine große Bewegungskomponente parallel zur Bewegungsrichtung der Schneideinheiten und eine kleine Bewegungskomponente quer zu dieser Bewegungsrichtung aufweisen. Die Schneideinheiten werden über Mitnahmestifte an den Rotor angekoppelt, wobei die Kopplung so ausgeführt ist, daß lediglich die Bewegungskomponente parallel zur Bewegungsrichtung der Schneideinheiten übertragen wird. Auf diese Weise können die Schneideinheiten des Scherkopfes in eine Schwingungsbewegung hoher Frequenz versetzt werden und der Scherkopf dabei problemlos um große Winkel geschwenkt werden. Allerdings weist ein derart ausgebildeter Scherkopf wegen des Motors ein relativ hohes Gewicht auf.

In der internationalen Patentanmeldung WO 03/041918 A1 wird ein elektrischer Rasierapparat mit einem schwenkbaren Scherkopf beschrieben. Der Rasierapparat weist einen Motor auf, der in dem schwenkbaren Scherkopf angeordnet ist und mittels einer flexiblen Verbindung mit einer Batterie verbunden ist, die im Handteil des Rasierapparates angeordnet ist.

Der Erfindung liegt die Aufgabe zugrunde, das Schersystem eines schwenkbaren Scherkopfes eines elektrischen Rasierapparats auf möglichst optimale Weise anzutreiben.

Diese Aufgabe wird durch einen elektrischen Rasierapparat mit der Merkmalskombination des Anspruchs 1 gelöst.

Der erfindungsgemäße elektrische Rasierapparat weist ein Gehäuse, einen relativ zum Gehäuse schwenkbaren Scherkopf mit wenigstens einem Schersystem und einen elektrischen Antrieb zum Antreiben wenigstens einer Komponente des Schersystems auf. Der Antrieb verfügt über einen ortsfesten Stator und wenigstens einen relativ zum Stator beweglichen Läufer. Die Besonderheit des erfindungsgemäßen Rasierapparats besteht darin, daß der Stator im Gehäuse und der Läufer im Scherkopf angeordnet sind.

Die Erfindung hat den Vorteil, daß die angetriebene Komponente des Schersystems zu Schwingungen sehr hoher Frequenz angeregt werden kann und dadurch eine gründliche Rasur ermöglicht. Ein weiterer Vorteil besteht im hohen Wirkungsgrad des eingesetzten Antriebskonzepts. Außerdem ist es von Vorteil, daß lediglich der Läufer, der sehr kompakt ausgebildet werden kann, im Scherkopf angeordnet ist und der Scherkopf dadurch kleinformatig und leicht ausgeführt werden kann. Dies ermöglicht eine komfortable Handhabung des erfindungsgemäßen Rasierapparats, wobei sich jeweils eine günstige Schwenkposition des Scherkopfes einstellt. Schließlich ist es noch von Vorteil, daß der Scherkopf problemlos über einen großen Bereich von Schwenkwinkeln geschwenkt werden kann.

Zwischen dem Stator und dem Läufer kann ein Spalt ausgebildet sein. In einem an den Spalt angrenzenden Bereich sind der Stator und der Läufer jeweils vorzugsweise so geformt, daß ein Betrieb des Antriebs auch dann möglich ist, wenn der Scherkopf inklusive des Läufers relativ zum Gehäuse geschwenkt ist. Insbesondere sind der Stator und der Läufer jeweils in dem an den Spalt angrenzenden Bereich so geformt, daß die magnetisch wirksame Breite des Spalts beim Schwenken des Scherkopfes im Wesentlichen gleich bleibt. Dadurch ist ein gleichbleibend hoher Wirkungsgrad des Antriebs über weite Teile des Schwenkbereichs gewährleistet. Beispielsweise kann der Stator in dem an den Spalt angrenzenden Bereich konkav und/oder der Läufer in dem an den Spalt angrenzenden Bereich konvex gewölbt sein. Der Scherkopf ist vorzugsweise um eine Schwenkachse schwenkbar, die parallel zur Bewegungsrichtung der angetriebenen Komponente des Schersystems verläuft.

Besonders vorteilhaft ist es, wenn der Läufer fest, insbesondere starr, mit der angetriebenen Komponente des Schersystems verbunden ist. Dadurch ist eine sehr präzise Steuerung der Bewegung der angetriebenen Komponente des Schersystems möglich. Insbesondere können die Schwingungsamplitude und die Schwingungsfrequenz der angetriebenen Komponente des Schersystems während der Rasur zuverlässig konstant gehalten und Schwingungseinbrüche vermieden werden.

Der Läufer kann beweglich, vorzugsweise linear beweglich, am Scherkopf aufgehängt sein. Insbesondere kann der Läufer mit wenigstens einem parallel zur Bewegungsrichtung des Läufers elastisch ausgebildeten Element gekoppelt sein, so daß ein schwingungsfähiges System entsteht, das sehr effizient angetrieben werden kann. Parallel zur Schwenkrichtung des Scherkopfes ist der Läufer vorzugsweise starr mit dem Scherkopf verbunden, so daß er gleichförmig mit dem Scherkopf geschwenkt wird. In einem bevorzugten Ausführungsbeispiel ist der Läufer mittels Schwingbrücken am Scherkopf befestigt.

Um den Läufer antreiben zu können, kann dieser wenigstens einen Permanentmagneten aufweisen. Dies hat den Vorteil, daß am Läufer keine Anschlußleitungen angebracht sein müssen. Um mit wenig Aufwand eine gewünschte Geometrie zu realisieren, kann auf einer dem Stator zugewandten Seite des Permanentmagneten ein Polschuh angeordnet sein.

In einer Weiterbildung des erfindungsgemäßen Rasierapparats sind mehrere Läufer vorgesehen, die mehrere Komponenten desselben Schersystems und/oder unterschiedlicher Schersysteme antreiben. Dadurch können auch relativ komplexe Schersysteme mit geringem Aufwand angetrieben werden.

Die Steuerung des Antriebs erfolgt vorzugsweise über den Stator, der hierfür wenigstens eine Wicklung aufweisen kann, die mittels einer Steuereinrichtung ansteuerbar ist. Insbesondere ist die Wicklung von der Steuereinrichtung so ansteuerbar, daß der Antrieb bei oder in der Nähe seiner Resonanzfrequenz betrieben wird. Dies hat den Vorteil, daß ein sehr hoher Wirkungsgrad erreicht wird. Die Steuereinrichtung kann so ausgebildet sein, daß sie Spannungspulse, vorzugsweise bipolare Spannungspulse, erzeugt. Insbesondere können die Spannungspulse pulsweitenmoduliert sein, so daß die der Wicklung zugeführte Leistung sehr einfach und präzise geregelt werden kann. Vorteilhafte Ausgestaltungen der Steuereinrichtung zeichnen sich dadurch aus, daß über die Ansteuerung der Wicklung schwenkwinkelabhängige Variationen der wirksamen Leistung des Antriebs kompensierbar sind oder die Bewegungsamplitude des Läufers auf einen konstanten Wert regelbar ist. Dadurch ist auch unter wechselnden äußeren Einflüssen ein gleichbleibend gutes Rasurergebnis erzielbar. Insbesondere im Hinblick auf eine möglichst optimale Ansteuerung der Wicklung ist es von Vorteil, wenn ein Sensor zur Erfassung einer mit dem Bewegungszustand des Läufers zusammenhängenden Größe vorgesehen ist.

Es wird weiterhin ein elektrischer Antrieb zum Antreiben wenigstens einer Komponente eines Schersystems eines relativ zu einem Gehäuse schwenkbaren Scherkopfes eines elektrischen Rasierapparats beschrieben. Der Antrieb weist einen ortsfesten Stator und wenigstens einen relativ zum Stator beweglichen Läufer auf und zeichnet sich dadurch aus, daß der Stator zum Einbau in das Gehäuse und der Läufer zum Einbau in den Scherkopf des Rasierapparats ausgebildet sind.

Die Erfindung wird nachstehend anhand des in der Zeichnung dargestellten Ausführungsbeispiels näher erläutert.

Es zeigen:
- Fig. 1: ein Ausführungsbeispiel für einen erfindungsgemäß ausgebildeten elektrischen Ra- sierapparat in einer schematischen Schnittdarstellung und
- Fig. 2: das in Fig. 1 dargestellte Ausführungsbeispiel des Rasierapparats in einer weiteren schematischen Schnittdarstellung.

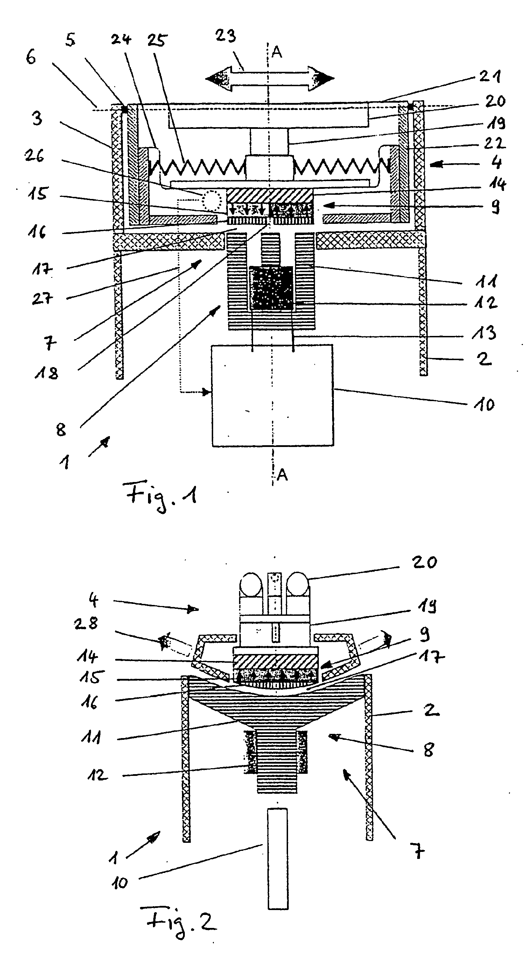

Fig. 1 zeigt ein Ausführungsbeispiel für einen erfindungsgemäß ausgebildeten elektrischen Rasierapparat 1 in einer schematischen Schnittdarstellung. Der Rasierapparat 1 weist ein Gehäuse 2 auf, das so geformt ist, daß es von einem Benutzer des Rasierapparats 1 in der Hand gehalten werden kann. Am Gehäuse 2 sind zwei Haltearme 3 angebracht, an denen ein Scherkopf 4 mittels zweier Zapfen 5 um eine Schwenkachse 6 schwenkbar aufgehängt ist. Die Schwenkachse 6 ist im Bereich der vom Gehäuse 2 abgewandten Seite des Scherkopfes 4 ausgebildet. Der Rasierapparat 1 weist weiterhin einen oszillierenden Linearmotor 7 auf, der aus einem Stator 8 und einem Läufer 9 besteht. Der Stator 8 ist im Gehäuse 2 angeordnet, in dem weiterhin eine Steuerelektronik 10 zur Ansteuerung des Linearmotors 7 und ggf. weitere nicht figürlich dargestellte Komponenten, beispielsweise Batterien, untergebracht sind. Der Stator 8 besteht aus einem Eisenkern 11, der vorzugsweise aus stapelförmig angeordneten weichmagnetischen Blechen zusammengesetzt ist und aus einer Wicklung 12, die in mehrere Wicklungspakete aufgeteilt sein kann. Die in Fig. 1 dargestellte Schnittfläche des Eisenkerns 11 weist die Form eines "E" auf, wobei die Wicklung 12 den Mittelbalken des "E" umschließt. Über Anschlußkabel 13 ist die Wicklung 12 an der Steuerelektronik 10 angeschlossen.

Der Läufer 9 ist im Scherkopf 4 angeordnet und weist eine weichmagnetische Trägerplatte 14 auf, auf der nebeneinander zwei Permanentmagnete 15 mit antiparalleler Polung angeordnet sind. Die Magnetisierungsrichtungen der Permanentmagnete 15 sind durch Pfeile angedeutet und verlaufen senkrecht zu der Fläche der Trägerplatte 14, auf der die Permanentmagnete 15 angeordnet sind, so daß die Trägerplatte 14 als Läuferrückschluß dient. Auf den beiden Permanentmagneten 15 sind zwei weichmagnetische Polschuhe 16 angeordnet, die bis nahe an den Eisenkern 11 des Stators 8 heranreichen, so daß zwischen den Polschuhen 16 und dem Eisenkern 11 ein schmaler Spalt 17 besteht, in dem kein magnetisches Material angeordnet ist. Der Spalt 17 kann zum Teil mit einem nichtmagnetischen Material ausgefüllt sein. Beispielsweise können die benachbarten Flächen der Polschuhe 16 und des Eisenkerns 11 mit Kunststoff beschichtet sein. In jedem Fall verbleibt aber zumindest ein Teilbereich des Spaltes 17 als ein Luftspalt, um eine Bewegung des Läufers 9 relativ zum Stator 8 zu ermöglichen. Ein weiterer Spalt 18, in dem ebenfalls kein magnetisches Material angeordnet ist, ist zwischen den beiden Polschuhen 16 ausgebildet. Der Spalt 18 zwischen den Polschuhen 16 ist breiter als der Spalt 17 zwischen den Polschuhen 16 und dem Eisenkern 11. Vorzugsweise ist der Spalt 18 ca. zweimal bis viermal so breit wie der Spalt 17. Die Permanentmagnete 15 sind mit der Trägerplatte 14 und den Polschuhen 16 fest verbunden, beispielsweise mittels eines Klebstoffs. Die Trägerplatte 14 und die Polschuhe 16 können jeweils aus weichmagnetischen Blechen bestehen. Alternativ zur weichmagnetischen Ausführung können die Polschuhe 16 auch aus einem permanentmagnetischen Material bestehen. In diesem Fall besteht die Möglichkeit, die Permanentmagnete 15 und die Polschuhe 16 einteilig auszubilden. Auf den Spalt 18 zwischen den Polschuhen 16 kann dann verzichtet werden.

Der Läufer 9 ist im Bereich der Trägerplatte 14 starr mit einem Messerträger 19 verbunden, auf dem zwei Untermesser 20 angeordnet sind. Benachbart zu jedem Untermesser 20 ist je eine entsprechend der Form des Untermessers 20 gebogene Scherfolie 21 an einem Scherkopfrahmen 22 befestigt. Der Messerträger 19 ist in Bewegungsrichtung des Läufers 9, die durch einen Doppelpfeil 23 angedeutet ist und parallel zur Schnittebene verläuft, beidseitig über je eine S-förmig ausgebildete Schwingbrücke 24 am Scherkopfrahmen 22 linear beweglich aufgehängt. Die quer zur Bewegungsrichtung des Läufers 9 orientierten Bereiche der Schwingbrücken 24 bestehen jeweils aus einem dünnen, hoch-schwingfesten Material, wie beispielsweise Federstahl. Ungefähr in der Mitte dieser Bereiche ist jeweils eine Öffnung ausgebildet, durch die je eine Resonanzfeder 25 geführt ist. Die Resonanzfedern 25 sind jeweils zwischen dem Messerträger 19 und dem Scherkopfrahmen 22 eingespannt und bilden zusammen mit dem Läufer 9, dem Messerträger 19 und den Untermessern 20 ein schwingungsfähiges System mit einer definierten Resonanzfrequenz. In der Nähe des Läufers 9 ist im Scherkopf 4 weiterhin ein Sensor 26 angeordnet, der über eine Signalleitung 27 mit der Steuerelektronik 10 verbunden ist. Der Sensor 26 erfaßt eine mit dem Bewegungszustand des Läufers 9 zusammenhängende Größe, beispielsweise dessen Geschwindigkeit oder Schwingungsamplitude. Ebenso ist es auch möglich, daß der Sensor 26 eine Größe erfaßt, die mit dem Bewegungszustand einer der Schwingbrücken 24, des Messerträgers 19 oder eines der Untermesser 20 zusammenhängt.

Im Betriebszustand des Rasierapparats 1 führt der Läufer 9 lineare Schwingungen mit einer Frequenz aus, die der Resonanzfrequenz des schwingungsfähigen Systems entspricht oder nahe bei der Resonanzfrequenz liegt. Für die Anregung derartiger Schwingungen ist nur eine relativ geringe Leistung erforderlich, so daß der Linearmotor 7 sehr effizient arbeitet. Um den Läufer 9 und damit auch die Untermesser 20 in Schwingung zu versetzen, wird die Wicklung 12 des Stators 8 von der Steuerelektronik 10 mit bipolaren Spannungspulsen variabler Pulsbreite angesteuert, so daß im Eisenkern 11 jeweils kurzzeitig ein Magnetfeld erzeugt wird, das auf die Polschuhe 16 des Läufers 9 einwirkt. Die Geometrie des Magnetfelds wird durch die Form des Eisenkerns 11 vorgegeben. Abhängig von der Richtung des Magnetfelds, die wiederum von der Stromrichtung in der Wicklung 12 und damit von der Polarität der von der Steuerelektronik 10 erzeugten Spannungspulse abhängt, erfolgt in der Darstellung der Fig. 1 eine Auslenkung des Läufers 9 nach links oder nach rechts aus der dargestellten Mittelposition. Durch wiederholtes Anlegen von Spannungspulsen an die Wicklung 12 zu geeigneten Zeitpunkten entsteht letztendlich eine lineare Schwingung parallel zur Schwenkachse 6 des Scherkopfes 4 mit einer Frequenz bei oder in der Nähe der Resonanzfrequenz des schwingungsfähigen Systems.

Die Erzeugung der Spannungspulse für die Wicklung 12 zum jeweils richtigen Zeitpunkt kann auf unterschiedliche Weise erfolgen. Bei einer ersten Variante erzeugt die Steuerelektronik 10 Spannungspulse einer fest vorgegeben Frequenz, die der Resonanzfrequenz des schwingungsfähigen Systems entspricht oder nahe bei dieser Resonanzfrequenz liegt. Dadurch wird der Läufer 9 zu entsprechenden Schwingungen synchron zu den Spannungspulsen der Steuerelektronik 10 angeregt. Bei einer zweiten Variante wird eine selbstschwingende Schleife ausgebildet, indem ein von der Schwingung des Läufers 9 abhängiges Signal in die Steuerelektronik 10 zurückgekoppelt wird. Das Signal kann beispielsweise vom Sensor 26 erzeugt werden. Durch die Rückkopplung wird die Wicklung 12 von der Steuerelektronik 10 so angesteuert, daß die Schwingungsfrequenz des Läufers 9 der Resonanzfrequenz des schwingungsfähigen Systems entspricht oder in der Nähe der Resonanzfrequenz liegt.

Um ein gleichbleibend gutes Rasurergebnis zu erzielen, wird die Schwingungsamplitude des Läufers 9 während der Rasur von der Steuerelektronik 10 auf einen konstanten Wert geregelt. Hierzu wird die Schwingungsamplitude oder die Geschwindigkeit des Läufers 9 als ein Istwert detektiert und mit einem Sollwert verglichen. Die durch den Vergleich ermittelte Regelabweichung wird einem Filter, beispielsweise mit einer Proportional-Integral-Charakteristik zugeführt, der ein Stellsignal generiert. Auf Basis des Stellsignals werden von einer Leistungseinheit bipolare Spannungspulse zur Ansteuerung der Wicklung 12 des Stators 8 erzeugt. Dabei variiert die Leistungseinheit die Ansteuerleistung abhängig vom Stellsignal, beispielsweise durch eine Pulsweitenmodulation der an die Wicklung 12 ausgegebenen Spannungspulse. Die für die Regelung der Schwingungsamplitude benötigten Istwerte können vom Sensor 26, der im Scherkopf 4 angeordnet ist, detektiert werden. Ebenso ist es auch möglich, eine Detektionseinrichtung einzusetzen, die ganz oder teilweise im Gehäuse 2 des Rasierapparats 1 angeordnet ist. Beispielsweise kann am Läufer 9 ein permanentmagnetischer Geber befestigt sein, dessen Bewegung von einer im Gehäuse 2 angeordneten Induktionsspule detektiert wird. Hierbei können prinzipiell auch die ohnehin vorhandenen Permanentmagnete 15 als Geber eingesetzt werden. In einer weiteren Ausgestaltung ist es auch möglich, völlig auf eine gegenständliche Detektionseinrichtung zu verzichten und die Istwerte aus den Spannungen und Strömen der Wicklung 12 des Stators 8 zu bestimmen.

Fig. 2 zeigt das in Fig. 1 dargestellte Ausführungsbeispiel des Rasierapparats 1 in einer weiteren schematischen Schnittdarstellung, bei welcher der Schnitt entlang der in Fig. 1 eingezeichneten Linie AA geführt ist. Dies bedeutet, daß der Schnitt quer zur Bewegungsrichtung des Läufers 9 und parallel zur Schwenkrichtung des Scherkopfes 4 verläuft. Die Schwenkrichtung des Scherkopfes 4 ist durch Pfeile 28 angedeutet. Die Scherfolien 21 sind bei der Darstellung der Fig. 2 vom Scherkopf 4 abgenommen und somit nicht dargestellt. Um den Läufer 9, der mit dem Scherkopf 4 geschwenkt wird, auch in einer Schwenkposition des Scherkopfes 4 betreiben zu können, die von der in Fig. 2 dargestellten Mittelposition abweicht, sollte der Spalt 17 zwischen den Polschuhen 16 des Läufers 9 und dem Eisenkern 11 des Stators 8 für alle zugelassenen Schwenkwinkel annähernd die gleiche Breite aufweisen. Dies wird dadurch erreicht, daß die Schwenkachse 6 relativ weit entfernt von diesem Spalt 17 angeordnet ist und die benachbarten Außenkonturen der Polschuhe 16 und des Eisenkerns 11 aneinander angepaßt sind. Hierzu ist der Eisenkern 11 in diesem Bereich konkav gewölbt. In entsprechender Weise sind die Polschuhe 16 mit der gleichen oder einer ähnlichen Krümmung konvex gewölbt. Die Krümmung kann dabei jeweils insbesondere als ein Kreisbogen ausgebildet sein, wobei der Mittelpunkt des Kreises auf oder in der Nähe der Schwenkachse 6 liegt. Ebenso ist es auch möglich, eine geringfügige Variation der Breite des Spalts 17 abhängig vom Schwenkwinkel des Scherkopfes 4 gezielt vorzusehen, um eine ggf. vorhandene Abhängigkeit der Antriebsleistung des Linearmotors 7 vom Schwenkwinkel zu kompensieren. Weiterhin besteht auch die Möglichkeit, die Auswirkungen einer ungewollten Variation der Breite des Spalts 17 auf die Antriebsleistung des Linearmotors 7 durch eine entsprechende Ansteuerung der Wicklung 12 des Stators 8 auszugleichen. Auf diese Weise kann auch anderweitig verursachten Abhängigkeiten der Antriebsleistung des Linearmotors 7 vom Schwenkwinkel des Scherkopfes 4 entgegengewirkt werden. Insbesondere kann auch der Leistungsabfall, der bei großen Schwenkwinkeln auftritt, wenn die Überdeckung zwischen den Polschuhen 16 und dem Eisenkern 11 abnimmt, bis zu einem gewissen Grad ausgeglichen werden. Auf diese Weise läßt sich ein großer Schwenkwinkelbereich ohne nennenswerte Leistungseinbußen des Linearmotors 7 realisieren.

Mit dem erfindungsgemäßen Linearmotor 7 können nicht nur die Untermesser 20 angetrieben werden, sondern beispielsweise auch die Scherfolien 21 oder ein nicht figürlich dargestellter Mittelschneiderkamm. In diesem Fall sind mehrere Läufereinheiten vorgesehen, die zusammengenommen ungefähr die Außenkontur des in den Fig. 1 und 2 dargestellten Läufers 9 aufweisen. Beispielsweise können zwei Läufereinheiten vorgesehen sein, wobei eine Läufereinheit mit den Untermessern 20 und die andere Läufereinheit mit den Scherfolien 21 gekoppelt ist. Die Läufereinheiten sind jeweils über eigene Schwingbrücken 24 beweglich aufgehängt und können allesamt vom unverändert ausgebildeten Stator 8 angetrieben werden. Dabei ist es möglich, durch die Ausstattung der Läufereinheiten mit unterschiedlich großen Polschuhen 16 unterschiedliche Schwingungsamplituden zu erzeugen. Ebenso ist es möglich, die Läufereinheiten in zueinander gegenphasige Schwingungen zu versetzen, indem die Läufereinheiten in zueinander entgegengesetzter magnetischer Polung ausgebildet werden.

## Patentansprüche

1. Elektrischer Rasierapparat mit einem Gehäuse (2), einem relativ zum Gehäuse (2) schwenkbaren Scherkopf (4), der wenigstens ein Schersystem aufweist und einem elektrischen Antrieb (7) zum Antreiben wenigstens einer Komponente (20, 21) des Schersystems, wobei der Antrieb (7) einen ortsfesten Stator (8) und wenigstens einen relativ zum Stator (8) beweglichen Läufer (9) aufweist, **dadurch gekennzeichnet, daß** der Stator (8) im Gehäuse (2) und der Läufer (9) im Scherkopf (4) angeordnet sind.

2. Rasierapparat nach Anspruch 1, **dadurch gekennzeichnet, daß** zwischen dem Stator (8) und dem Läufer (9) ein Spalt (17) ausgebildet ist und der Stator (8) und der Läufer (9) jeweils in einem an den Spalt (17) angrenzenden Bereich so geformt sind, daß ein Betrieb des Antriebs (7) auch dann möglich ist, wenn der Scherkopf (4) inklusive des Läufers (9) relativ zum Gehäuse (2) geschwenkt ist.

3. Rasierapparat nach Anspruch 2, **dadurch gekennzeichnet, daß** der Stator (8) und der Läufer (9) jeweils in dem an den Spalt (17) angrenzenden Bereich so geformt sind, daß die Breite des magnetisch wirksamen Spalts (17) beim Schwenken des Scherkopfes (4) im Wesentlichen gleich bleibt.

4. Rasierapparat nach einem der Ansprüche 2 oder 3, **dadurch gekennzeichnet, daß** der Stator (8) in dem an den Spalt (17) angrenzenden Bereich konkav und/oder der Läufer (9) in dem an den Spalt (17) angrenzenden Bereich konvex gewölbt ist.

5. Rasierapparat nach einem der vorhergehenden Ansprüche, **dadurch gekennzeichnet, daß** der Scherkopf (4) um eine Schwenkachse (6) schwenkbar ist, die parallel zur Bewegungsrichtung der angetriebenen Komponente (20, 21) des Schersystems verläuft.

6. Rasierapparat nach einem der vorhergehenden Ansprüche, **dadurch gekennzeichnet, daß** der Läufer (9) fest, insbesondere starr, mit der angetriebenen Komponente (20, 21) des Schersystems verbunden ist.

7. Rasierapparat nach einem der vorhergehenden Ansprüche, **dadurch gekennzeichnet, daß** der Läufer (9) beweglich, vorzugsweise linear beweglich, am Scherkopf (4) aufgehängt ist.

8. Rasierapparat nach einem der vorhergehenden Ansprüche, **dadurch gekennzeichnet, daß** der Läufer (9) mit wenigstens einem parallel zur Bewegungsrichtung des Läufers (9) elastisch ausgebildeten Element (25) gekoppelt ist.

9. Rasierapparat nach einem der vorhergehenden Ansprüche, **dadurch gekennzeichnet, daß** der Läufer (9) parallel zur Schwenkrichtung des Scherkopfes (4) starr mit dem Scherkopf (4) verbunden ist.

10. Rasierapparat nach einem der vorhergehenden Ansprüche, **dadurch gekennzeichnet, daß** der Läufer (9) mittels Schwingbrücken (24) am Scherkopf (4) befestigt ist.

11. Rasierapparat nach einem der vorhergehenden Ansprüche, **dadurch gekennzeichnet, daß** der Läufer (4) wenigstens einen Permanentmagneten (15) aufweist.

12. Rasierapparat nach Anspruch 11, **dadurch gekennzeichnet, daß** auf einer dem Stator (8) zugewandten Seite des Permanentmagneten (15) ein Polschuh (16) angeordnet ist.

13. Rasierapparat nach einem der vorhergehenden Ansprüche, **dadurch gekennzeichnet, daß** mehrere Läufer (9) vorgesehen sind, die mehrere Komponenten (20, 21) desselben Schersystems und/oder unterschiedlicher Schersysteme antreiben.

14. Rasierapparat nach einem der vorhergehenden Ansprüche, **dadurch gekennzeichnet, daß** der Stator (8) wenigstens eine Wicklung (12) aufweist, die mittels einer Steuereinrichtung (10) ansteuerbar ist.

15. Rasierapparat nach Anspruch 14, **dadurch gekennzeichnet, daß** die Wicklung (12) von der Steuereinrichtung (10) so ansteuerbar ist, daß der Antrieb (7) bei oder in der Nähe seiner Resonanzfrequenz betrieben wird.

16. Rasierapparat nach einem der Ansprüche 14 oder 15, **dadurch gekennzeichnet, daß** die Steuereinrichtung (10) so ausgebildet ist, daß sie Spannungspulse, vorzugsweise bipolare Spannungspulse, erzeugt.

17. Rasierapparat nach Anspruch 16, **dadurch gekennzeichnet, daß** die Spannungspulse pulsweitenmoduliert oder amplitudenmoduliert sind.

18. Rasierapparat nach einem der Ansprüche 14 bis 17, **dadurch gekennzeichnet, daß** schwenkwinkelabhängige Variationen der wirksamen Leistung des Antriebs (7) von der Steuereinrichtung (10) über die Ansteuerung der Wicklung (12) kompensierbar sind.

19. Rasierapparat nach einem der Ansprüche 14 bis 18, **dadurch gekennzeichnet, daß** die Bewegungsamplitude des Läufers (9) von der Steuereinrichtung (10) über die Ansteuerung der Wicklung (12) auf einen konstanten Wert regelbar ist.

20. Rasierapparat nach einem der vorhergehenden Ansprüche, **dadurch gekennzeichnet, daß** ein Sensor (26) zur Erfassung einer mit dem Bewegungszustand des Läufers (9) zusammenhängenden Größe vorgesehen ist.

## Claims

1. An electric shaving apparatus with a housing (2), a clipping head (4) that swivels relative to the housing (2), the clipping head having at least one clipping system and an electric drive (7) to drive at least one component (20, 21) of the clipping system, wherein the drive (7) has a fixed stator (8) and at least one rotor (9) that moves relative to the stator (8), **characterized in that** the stator (8) is arranged in the housing (2) and the rotor (9) is arranged in the clipping head (4).

2. The shaving apparatus according to Claim 1, **characterized in that** a gap (17) is formed between the stator (8) and the rotor (9), and the stator (8) and the rotor (9) are each formed in an area adjacent the gap (17) such that it is also possible to operate the drive (7) when the clipping head (4), including the rotor (9), is swiveled relative to the housing (2).

3. The shaving apparatus according to Claim 2, **characterized in that** the stator (8) and the rotor (9) are formed in the area adjacent to the gap (17) such that the width of the magnetically functioning gap (17) remains essentially the same when the clipping head (4) is swiveled.

4. The shaving apparatus according to either Claim 2 or 3, **characterized in that** the stator (8) is curved concavely in the area adjacent to the gap (17) and/or the rotor (9) is curved convexly in the area adjacent to the gap (17).

5. The shaving apparatus according to any of the preceding claims, **characterized in that** the clipping head (4) can swivel around a swiveling axis (6), which proceeds parallel to the direction of motion of the driven component (20, 21) of the clipping system.

6. The shaving apparatus according to any of the preceding claims, **characterized in that** the rotor (9) is connected to the driven component (20, 21) of the clipping system in a manner that is fixed, or particularly rigid.

7. The shaving apparatus according to any of the preceding claims, **characterized in that** the rotor (9) is hung on the clipping head (4) in a manner so as to move, preferably linearly.

8. The shaving apparatus according to any of the preceding claims, **characterized in that** the rotor (9) is coupled with at least one elastically formed element (25), which is parallel to the direction of motion of the rotor (9).

9. The shaving apparatus according to any of the preceding claims, **characterized in that** the rotor (9) is rigidly connected to the clipping head (4) in a manner that is parallel to the swiveling direction of the clipping head (4).

10. The shaving apparatus according to any of the preceding claims, **characterized in that** the rotor (9) is fastened to the clipping head (4) using swing bridges (24).

11. The shaving apparatus according to any of the preceding claims, **characterized in that** the rotor (4) has at least one permanent magnet (15).

12. The shaving apparatus according to Claim 11, **characterized in that** a pole shoe (16) is arranged on a side of the permanent magnet (15) facing toward the stator (8).

13. The shaving apparatus according to any of the preceding claims, **characterized in that** multiple rotors (9) are provided that drive multiple components (20, 21) of the same clippingshaving system and/or of different clipping systems.

14. The shaving apparatus according to any of the preceding claims, **characterized in that** the stator (8) has at least one winding (12), which can be actuated using a control device (10).

15. The shaving apparatus according to Claim 14, **characterized in that** the winding (12) can be actuated by the control device (10) such that the drive (7) is driven at or close to its resonance frequency.

16. The shaving apparatus according to either Claim 14 or 15, **characterized in that** the control device (10) is formed such that it generates voltage pulses, preferably bipolar voltage pulses.

17. The shaving apparatus according to Claim 16, **characterized in that** the voltage pulses are pulse-width-modulated or amplitude-modulated.

18. The shaving apparatus according to any of Claims 14 to 17, **characterized in that** the swivel-angle-dependent variations of the effective power of the drive (7) can be compensated by the control device (10) via actuation of the winding (12).

19. The shaving apparatus according to any of Claims 14 to 18, **characterized in that** the motion amplitude of the rotor (9) can be controlled at a constant value by the control device (10) via actuation of the winding (12).

20. The shaving apparatus according to any of the preceding claims, **characterized in that** a sensor (26) is provided to record a variable associated with the motion state of the rotor (9).

## Revendications

1. Rasoir électrique comprenant un boîtier (2), une tête de rasage (4) pivotant par rapport au boîtier (2) et dotée d'au moins un système de rasage, et un entraînement électrique (7) permettant d'entraîner au moins un composant (20, 21) du système de rasage, l'entraînement (7) présentant un stator fixe (8) et au moins un rotor (9) mobile par rapport au stator (8), **caractérisé en ce que** le stator (8) et le rotor (9) sont disposés respectivement dans le boîtier (2) et la tête de rasage (4).

2. Rasoir selon la revendication 1, **caractérisé en ce qu'**un interstice (17) est réalisé entre le stator (8) et le rotor (9) et le stator (8) et le rotor (9) sont chacun formés dans une zone adjacente à l'interstice (17) de façon telle qu'une activation de l'entraînement (7) est également possible lorsque la tête de rasage (4), incluant le rotor (9), est pivotée par rapport au boîtier (2).

3. Rasoir selon la revendication 2, **caractérisé en ce que** le stator (8) et le rotor (9) sont chacun formés dans la zone adjacente à l'interstice (17) de façon telle que la largeur de l'interstice (17) à action magnétique reste sensiblement identique en cas de pivotement de la tête de rasage (4).

4. Rasoir selon l'une quelconque des revendications 2 ou 3, **caractérisé en ce que** le stator (8) est bombé de façon concave dans la zone adjacente à l'interstice (17) et/ou le rotor (9) est bombé de façon convexe dans la zone adjacente à l'interstice (17).

5. Rasoir selon l'une quelconque des revendications précédentes, **caractérisé en ce que** la tête de rasage (4) peut être pivotée autour d'un axe de pivotement (6) qui s'étend parallèlement au sens de déplacement du composant entraîné (20, 21) du système de rasage.

6. Rasoir selon l'une quelconque des revendications précédentes, **caractérisé en ce que** le rotor (9) est relié de façon fixe, plus particulièrement de façon rigide, au composant entraîné (20, 21) du système de rasage.

7. Rasoir selon l'une quelconque des revendications précédentes, **caractérisé en ce que** le rotor (9) est suspendu de façon mobile, de préférence en mobilité linéaire, à la tête de rasage (4).

8. Rasoir selon l'une quelconque des revendications précédentes, **caractérisé en ce que** le rotor (9) est accouplé à au moins un élément (25) conçu de façon élastique parallèlement au sens de déplacement du rotor (9).

9. Rasoir selon l'une quelconque des revendications précédentes, **caractérisé en ce que** le rotor (9) est relié de façon rigide à la tête rasage (4) parallèlement au sens de pivotement de la tête de rasage (4).

10. Rasoir selon l'une quelconque des revendications précédentes, **caractérisé en ce que** le rotor (9) est fixé à la tête de rasage (4) au moyen de ponts oscillants (24).

11. Rasoir selon l'une quelconque des revendications précédentes, **caractérisé en ce que** le rotor (9) présente au moins un aimant permanent (15).

12. Rasoir selon la revendication 11, **caractérisé en ce qu'**une pièce polaire (16) est disposée sur le côté de l'aimant permanent (15) qui est tourné vers le stator (8).

13. Rasoir selon l'une quelconque des revendications précédentes, **caractérisé en ce que** plusieurs rotors (9) sont prévus, qui entraînent plusieurs composants (20, 21) du même système de rasage et/ou de différents systèmes de rasage.

14. Rasoir selon l'une quelconque des revendications précédentes, **caractérisé en ce que** le stator (8) présente au moins un bobinage (12) qui peut être excité au moyen d'un dispositif de commande (10).

15. Rasoir selon la revendication 14, **caractérisé en ce que** le bobinage (12) peut être excité par le dispositif de commande (10) de façon telle que l'entraînement (7) est exploité à sa fréquence de résonance ou à une fréquence proche de celle-ci.

16. Rasoir selon l'une quelconque des revendications 14 ou 15, **caractérisé en ce que** le dispositif de commande (10) est conçu de telle manière qu'il génère des impulsions de tension, de préférence des impulsions de tension bipolaires.

17. Rasoir selon la revendication 16, **caractérisé en ce que** les impulsions de tension sont à modulation de largeur d'impulsions ou à modulation d'amplitude.

18. Rasoir selon l'une quelconque des revendications 14 à 17, **caractérisé en ce que** les variations de la puissance effective de l'entraînement (7), qui dépendent de l'angle de pivotement, peuvent être compensées par le dispositif de commande (10) via l'excitation du bobinage (12).

19. Rasoir selon l'une quelconque des revendications 14 à 18, **caractérisé en ce que** l'amplitude de déplacement du rotor (9) peut être réglée à une valeur constante par le dispositif de commande (10) via l'excitation du bobinage (12).

20. Rasoir selon l'une quelconque des revendications précédentes, **caractérisé en ce qu'**un capteur (26) permettant d'enregistrer une grandeur corrélée à l'état de déplacement du rotor (9) est prévu.
